# EUROPÄISCHE PATENTSCHRIFT

(11) **EP 3 560 051 B1**
(45) Veröffentlichungstag und Bekanntmachung des Hinweises auf die Patenterteilung: **31.08.2022**
(21) Anmeldenummer: 17808788.8
(22) Anmeldetag: 09.11.2017
(51) Int. Cl.: H02B 1/56, H02B 5/00, H01F 27/02, H01F 27/08

(54) **UMSPANNSTATION, VERFAHREN UND VORRICHTUNG FÜR EINE UMSPANNSTATION**
SUBSTATION, METHOD AND DEVICE FOR A SUBSTATION
SOUS-STATION, PROCÉDÉ ET DISPOSITIF POUR SOUS-STATION

(30) Priorität: 22.12.2016 DE 102016125375
(43) Veröffentlichungstag der Anmeldung: 30.10.2019
(73) Patentinhaber: RWE Renewables GmbH, 45145 Essen (DE)
(72) Erfinder: RUNGE, Jörn, 31608 Marklohe (DE)
(74) Vertreter: Cohausz & Florack
(86) Internationale Anmeldenummer: PCT/EP2017/078733
(87) Internationale Veröffentlichungsnummer: WO 2018/114125

(56) Entgegenhaltungen:
- EP-A1- 0 551 554
- EP-A2- 1 918 581
- EP-A2- 2 762 720
- DE-C- 739 588
- US-A1- 2011 080 001
- US-A1- 2013 158 897
- US-B2- 7 443 273

## Beschreibung

Die Erfindung betrifft eine Offshore-Umspannstation, umfassend mindestens einen Transformator und mindestens eine an mindestens einer Seitenwand oder einem Dach der Umspannstation angeordnete Transformatorkühleinrichtung eingerichtet zum Kühlen des mindestens einen Transformators. Darüber hinaus betrifft die Erfindung ein Verfahren und eine Vorrichtung für solch eine Umspannstation.

Heutzutage werden vermehrt Windenergiesysteme für die Produktion von elektrischer Energie eingesetzt. Bevorzugt werden hierbei sogenannte Offshore-Windenergiesysteme errichtet. Grund hierfür ist, dass im Vergleich zu Onshore-Windenergiesystemen die erwartete mittlere Windgeschwindigkeit und damit der zu erwartende Energieertrag aufgrund der Offshore-Lage eines derartigen Windenergiesystems in der Regel höher ist.

Ein Offshore-Windenergiesystem bzw. ein Offshore-Windkraftwerk weist in der Regel mindestens eine Offshore-Umspannstation (auch Offshore-Substation genannt) und eine Mehrzahl von Windkraftanlagen auf, die elektrisch mit der Offshore-Umspannstation verbunden sind. Die von den Windkraftanlagen erzeugte elektrische Leistung bzw. der elektrische Strom wird zunächst über Kabel an die Offshore-Umspannstation übertragen. Die Offshore-Umspannstation ist dazu eingerichtet, diesen Strom über mindestens ein Kabel an eine Onshore-Kopfstation zu übertragen, um den Strom in ein angeschlossenes (öffentliches) Stromnetz einzuspeisen.

Eine Offshore-Umspannstation weist mindestens einen Transformator auf, um den von den/die Windkraftanlagen erhaltene(n) Strom/Spannung für eine Weiterleitung an eine Onshore-Kopfstation zu transformieren. Ein derartiger Transformator ist dazu eingerichtet, hohe Ströme im 1000 A Bereich zu verarbeiten. Zur Kühlung des Transformators ist oftmals an mindestens einer Seitenwand oder dem Dach der Offshore-Umspannstation eine Transformatorkühleinrichtung vorgesehen. Transformator und Transformatorkühleinrichtung können eine Einheit bilden.

Da eine Reparatur auf See mit erheblichem Aufwand verbunden ist, ist es ein stetes Anliegen, eine möglichst hohe Betriebssicherheit zur Verfügung zu stellen. Derzeit werden Transformatoren und die korrespondierenden Kühleinrichtungen relativ groß dimensioniert. Grund hierfür ist, dass die dafür zuständige Auslegungsnorm die Kühlung durch den Wind nicht (ausreichend) berücksichtigt. Dies führt zu Überdimensionierungen, einem unnötigen Bauraumbedarf auf der Umspannstation und damit unnötig hohen Kosten bei der Stahlstruktur der Umspannstation und deren Fundament, deren Installation und bei den Anschaffungskosten der Transformatoren.

Die Druckschrift US 7 443 273 B2 offenbart eine Offshore-Substation mit einem zu kühlenden Transformator, wobei die Offshore-Substation über Luftumlenkungseinrichtungen verfügt. Ferner ist aus der US 7 443 273 B2 eine Temperaturmesseinrichtung bekannt, die eine Überwachung und Abschaltung des Transformators ermöglicht. Die Druckschrift EP 2 762 720 A2 betrifft ein Verfahren zum Optimieren des Betriebs einer Windkraftanlage. Schließlich offenbart die Druckschrift US 2013/0158897 A1 ein System und ein Verfahren zum Überwachen und Regeln eines Transformators, wobei insbesondere beschrieben wird, dass der in den Transformator eingespeiste Strom abhängig von einer gemessenen Transformatortemperatur geregelt werden kann.

Der Erfindung liegt daher die Aufgabe zugrunde, eine Umspannstation, ein Verfahren zum Betreiben von mindestens einem Transformator einer Umspannstation und eine Vorrichtung für eine Umspannstation zur Verfügung zu stellen, welche/s eine Reduzierung des Bauraumbedarfs und der Kosten ermöglicht, ohne die Betriebssicherheit zu reduzieren.

Die Aufgabe wird gemäß einem ersten Aspekt der Erfindung gelöst durch eine Umspannstation nach Anspruch 1. Weiterhin wird die Aufgabe gemäß einem ersten Aspekt der Erfindung durch ein Verfahren gemäß Anspruch 10 und gemäß einem noch weiteren Aspekt der Erfindung durch eine Vorrichtung gemäß Anspruch 11 gelöst.

Die Offshore-Umspannstation, umfasst mindestens einen Transformator. Die Umspannstation umfasst mindestens eine an mindestens einer Seitenwand der Umspannstation oder einem Dach der Umspannstation angeordnete Transformatorkühleinrichtung eingerichtet zum Kühlen des mindestens einen Transformators. Die Umspannstation umfasst mindestens eine an mindestens einer Dachkante der Umspannstation angeordnete Luftumlenkeinrichtung und/oder mindestens eine an mindestens einer Seitenkante der Umspannstation angeordnete Luftumlenkeinrichtung. Die Luftumlenkeinrichtung ist derart angeordnet, dass eine Luftbewegung in Richtung der Transformatorkühleinrichtung lenkbar ist.

Im Gegensatz zum Stand der Technik ist erkannt worden, dass unter Ausnutzung der erwartenden Winde und insbesondere deren Windrichtung an der Umspannstation durch eine Lenkung der Luftbewegung zur Luftkühlung die Kühlleistung einer Transformatorkühleinrichtung erhöht wird. Transformator und/oder Transformatorkühleinrichtungen können kleiner dimensioniert werden. Bauraumbedarf und/oder Installationsaufwand können reduziert werden. Die Betriebssicherheit kann dennoch gewährleistet und sogar erhöht werden.

Die Umspannstation ist vorzugsweise eine Offshore-Substation eines Offshore-Windenergiesystems oder eine Offshore-Kopfstation eines Hochspannungs-Gleichstrom-Übertragungs-(HGÜ )Systems. Ein Offshore-Windenergiesystem kann eine Vielzahl von Windkraftanlagen aufweisen, die elektrisch mit der Umspannstation über Seekabel verbunden sind. Eine Windkraftanlage wandelt die kinetische Energie des Windes mittels eines Rotors und eines Generators in elektrische Energie um, welche über die Seekabel an die Umspannstation übertragen wird. Die Umspannstation kann elektrisch mit einer Onshore-Station, wie eine Hochspannungs-Gleichstrom-Übertragungs-(HGÜ-) Station, verbunden sein. Eine elektrische Verbindung kann insbesondere durch mindestens ein Seekabel realisiert sein. An der oberspannungs- oder unterspannungsseitigen Wicklung des Transformators kann mindestens ein elektrischer Parameter erfasst werden, um die in das Stromnetz eingespeiste Leistung bzw. den eingespeisten Strom zu regeln.

Die Umspannstation kann einen oder mehrere Transformator(en) umfassen. Der mindestens eine Transformator kann mit einer Transformatorkühleinrichtung gekoppelt sein. Beispielsweise kann ein Fluidkreislauf (z.B. Ölkreislauf) vorgesehen sein, um den mindestens einen Transformator zu kühlen.

Eine Umspannstation weist vorliegend mindestens ein Dach, einen Boden und mindestens eine Dach und Boden verbindende Seitenwand auf. In der Regel weist eine Umspannstation eine rechteckförmige Grundfläche auf. In diesem Fall können vier Seitenwände mit vier Seitenkanten vorgesehen sein. Es versteht sich, dass gemäß anderen Varianten auch andere Grundflächenformen vorgesehen sein können.

Eine Dachkante ist vorliegend insbesondere der Bereich, in dem eine vertikale Wand (z.B. Seitenwand) auf eine horizontale Wand (insbesondere das Dach) trifft bzw. diese(s) berührt. Eine Dachkante umfasst insbesondere auch eine Unterkante an der Umspannstation. Eine Dachkante kann eine eckige oder abgerundete Form aufweisen. Eine Dachkante ist insbesondere eine Horizontalkante der Umspannstation. Eine Seitenkante ist vorliegend insbesondere der Bereich, in dem eine erste vertikale Wand (z.B. Seitenwand) auf eine weitere vertikale Wand (z.B. Seitenwand) trifft bzw. diese berührt. Eine Seitenkante kann eine eckige oder abgerundete Form aufweisen. Eine Seitenkante ist insbesondere eine im Wesentlichen vertikale Kante der Umspannstation.

An mindestens einer Dach- oder Seitenkante, also in dem Bereich, in dem entweder eine Seitenkante auf eine Dachkante oder eine Seitenkante auf eine Seitenkante trifft, ist mindestens eine Luftumlenkeinrichtung angeordnet. Beispielsweise kann mindestens ein Verbindungselement vorgesehen sein, um die Luftumlenkeinrichtung im Bereich einer Dachkante oder einer Seitenkante zu befestigen. Das mindestens eine Verbindungselement kann derart gebildet sein, dass ein vorgebbarer Mindestabstand (z.B. mindestens 0,1 m, bevorzugt zwischen 1 m und 10 m) zwischen der Luftumlenkeinrichtung und der entsprechenden Kante vorliegt.

Die Luftumlenkeinrichtung, beispielsweise in Form einer Metallstruktur, ist derart eingerichtet, dass ein Luftstrom (insbesondere Wind) in Richtung der mindestens einen Transformatorkühleinrichtung gelenkt werden kann. Anmeldungsgemäß ist erkannt worden, dass insbesondere aufgrund der hohen Korrelation von Windgeschwindigkeit und elektrischem Transformatorstrom der Wind zur (zusätzlichen) Kühlung eingesetzt werden kann. Ferner ist erkannt worden, dass aufgrund der seitlichen Anbringung der Transformatorkühleinrichtung diese bei bestimmten Windverhältnissen im Windschatten liegen kann. Um auch in diesem Fall eine Kühlung durch den Wind/Luftstrom zu ermöglichen, ist die Luftumlenkeinrichtung derart im Bereich einer Kante angeordnet, dass sie einen existieren Luftstrom aus zumindest einer ersten Richtung in Richtung der mindestens einen Transformatorkühleinrichtung lenken kann. Insbesondere kann durch die Luftumlenkeinrichtung zwischen der Luftumlenkeinrichtung (z.B. ein Luftleitblech der Luftumlenkeinrichtung) und der Außenwand-/dach der Umspannstation ein Luftkanal gebildet werden, der derart gebildet ist, dass ein Luftstrom aus zumindest einer ersten Richtung in Richtung der mindestens einen Transformatorkühleinrichtung gelenkt wird. Die Kühlung des Transformators kann signifikant verbessert werden, auch wenn sich die Kühleinrichtung temporär im Windschatten der Umspannstation befindet.

Gemäß einer ersten Ausführungsform einer Umspannstation der vorliegenden Anmeldung kann die Luftumlenkeinrichtung mindestens ein Luftleitelement insbesondere in Form eines Luftleitblechs umfassen. Ein Luftleitelement ist insbesondere ein flächiges Element eingerichtet zur (Um-) Lenkung von einem Luftstrom. Das Luftleitelement kann aus Kunststoff, Metall oder dergleichen gebildet sein. Ein oder mehrere Luftleitblech(e) eignen sich besonders zur Luft- bzw. Windlenkung. Ein Luftleitelement insbesondere in Form eines Luftleitblechs kann mit einem oder mehreren Verbindungselement(en) im Bereich einer Kante an einer Wand und/oder einem Dach der Umspannstation befestigt werden. Zwischen dem mindestens einen Luftleitelement insbesondere in Form eines Luftleitblechs und der Außenwand bzw. dem Außendach kann ein Luftkanal hergestellt werden. Der Luftkanal kann aufgrund der entsprechenden Anordnung des mindestens einen Luftleitelements insbesondere in Form eines Luftleitblechs einer Luftumlenkeinrichtung einen Luftstrom aus mindestens einer ersten Richtung in Richtung der Transformatorkühleinrichtung lenken. Es versteht sich, dass eine Mehrzahl von Verbindungselementen vorgesehen sein kann, um z.B. eine ausreichende Stabilität und/oder optimale Umlenkung zu gewährleisten.

Ein Luftleitelement insbesondere in Form eines Luftleitblechs kann grundsätzlich eine beliebige Form aufweisen. Insbesondere weist es eine flächige Struktur auf. Vorzugsweise kann das Luftleitblech ein planes (bzw. flaches) Seitenprofil oder ein gebogenes Seitenprofil umfassen. Auch können eine Mehrzahl von Luftleitblechen kombiniert werden, um ein vorgebbares Seitenprofil einer Luftumlenkeinrichtung herzustellen. Das Luftleitblech kann insbesondere an die Dimensionen der Umspannstation und/oder an die Dimensionen und/oder Position der Transformatorkühleinrichtung angepasst sein. In einfacher Weise kann eine noch bessere Kühlung bereitgestellt werden.

Grundsätzlich kann es sich in einer bevorzugten Ausführungsform bei der mindestens einen Luftumlenkeinrichtung um eine statische Einrichtung handeln. Eine entsprechende Einrichtung kann in einfacher Weise konstruiert, installiert und betrieben werden. Bei einer weiteren Ausführungsform einer anmeldungsgemäßen Umspannstation kann die Luftumlenkeinrichtung eine an die augenblicklich herrschenden Windverhältnisse (dynamisch) anpassbare Luftumlenkeinrichtung sein. Mit anderen Worten erlaubt eine derartige Luftumlenkeinrichtung die Bereitstellung unterschiedlicher Luftkanäle beispielsweise abhängig von einer augenblicklichen Windrichtung. Insbesondere können zumindest zwei Luftkanäle unterschiedlicher Form durch Verfahren eines Luftleitblechs hergestellt werden.

Vorzugsweise kann die Luftumlenkeinrichtung mindestens einen in Wirkverbindung mit dem mindestens einen Luftleitelement stehenden Aktuator umfassen. Der mindestens eine Aktuator kann zum Verfahren (bzw. Bewegen) des mindestens einen Luftleitelements zwischen mindestens einer ersten Position (bestimmter Winkel und/oder Abstand zur Umspannstation) und einer weiteren Position (bestimmter weiterer Winkel und/oder Abstand zur Umspannstation) eingerichtet sein. Der Aktuator kann eingerichtet sein, zwischen der ersten und weiteren Position Zwischenpositionen einzustellen. Indem der Aktuator das Luftleitelement insbesondere in Bezug auf Winkel und/oder Abstand zur Umspannstation ändern kann, kann der Luftkanal dynamisch geändert werden. Der Zweck ist insbesondere, die Kühlwirkung des Windstromes zu maximieren. Ein Regelziel wäre dabei die Minimierung der Transformatortemperatur durch z.B. iteratives Verändern von Winkel und Abstand zur Umspannstation mit einem Optimalwertregler von Winkel und Abstand.

Es versteht sich, dass eine Mehrzahl von Aktuatoren vorgesehen sein kann. Ein Aktuator kann hierbei an einem Verbindungselement und/oder einem weiteren Luftleitblech und/oder der Wand oder Dach der Umspannstation befestig sein. Im zuletzt genannten Fall kann ein Aktuator gleichzeitig zumindest teilweise die Funktion eines Verbindungselements übernehmen.

In einer besonders bevorzugten Ausführungsform einer Umspannstation kann die Umspannstation mindestens eine Steuereinrichtung eingerichtet zum Steuern des Aktuators umfassen. Beispielsweise kann die Steuereinrichtung in der Umspannstation integriert sein oder mit dieser über einen Kommunikationskanal verbunden sein. Die Steuereinrichtung kann zum Steuern des Aktuators abhängig von mindestens einem bereitgestellten meteorologischen Parameter eingerichtet sein.

Beispielsweise kann eine drahtgebundene und/oder drahtlose Kommunikationsverbindung zwischen der Steuereinrichtung und dem mindestens einen Aktuator vorgesehen sein. Die Steuereinrichtung kann insbesondere eingerichtet sein, ein Ansteuerungssignal an den mindestens einen Aktuator zu senden, um ein Verfahren von mindestens einem Luftleitblech von einer ersten Position in mindestens eine weitere Position zu bewirken (um eine Änderung der Form eines Luftkanals zu bewirken).

Gemäß einer weiteren Ausführungsform der Umspannstation kann der mindestens eine meteorologische Parameter die (lokale) Windgeschwindigkeit (an der Umspannstation oder einem anderen in der Nähe befindlichen Messpunkt) und/oder die (lokale) Windrichtung (an der Umspannstation oder einem anderen in der Nähe befindlichen Messpunkt) und/oder die (lokale) Luftfeuchtigkeit (an der Umspannstation oder einem anderen in der Nähe befindlichen Messpunkt) und/oder die (lokale) Umgebungstemperatur (an der Umspannstation oder einem anderen in der Nähe befindlichen Messpunkt) und/oder die (lokale) Sonneneinstrahlung (an der Umspannstation, insbesondere der Transformatorkühleinrichtung oder einem anderen in der Nähe befindlichen Messpunkt) sein. Insbesondere kann der mindestens eine meteorologische Parameter ein augenblicklich gemessener (oder vorhergesagter) meteorologischer Parameter sein. Beispielsweise kann die Umspannstation über mindestens eine Messeinrichtung verfügen, um mindestens einen der genannten Parameter insbesondere an der Umspannstation zu erfassen. Der mindestens eine gemessene Parameter kann kontinuierlich erfasst und der Steuereinrichtung beispielsweise über eine Kommunikationsverbindung zur Verfügung gestellt werden. Es ist festgestellt worden, dass jeder der obigen Parameter einen Einfluss auf die Kühlung der Transformatorkühleinrichtung haben kann. Vorteilhafterweise können zumindest die genannten Parameter gemessen und der Steuereinrichtung zur Verfügung gestellt werden. Die Steuereinrichtung kann die zur Verfügung gestellten Parameter auswerten und eine optimale Einstellung der Aktuatoren (und der/des dadurch gebildeten Luftkanals/kanäle) bewirken.

In einer weiteren Ausführungsform einer Umspannstation wird anmeldungsgemäß vorgeschlagen, dass die Umspannstation ferner mindestens eine Messeinrichtung eingerichtet zum Messen von mindestens einem für die Temperatur des Transformators relevanten Parameter umfassen kann. Die Umspannstation kann ferner mindestens eine Regelungseinrichtung zumindest eingerichtet zum Regeln des in den Transformator eingespeisten Stroms zumindest abhängig von dem gemessenen Parameter umfassen. Indem eine Stromregelung abhängig von einem Parameter vorgesehen ist, der relevant für die Temperatur des Transformators ist, kann insbesondere die Betriebssicherheit weiter erhöht und/oder die Strombelastung des Transformators maximiert werden. Hierdurch kann die Leistung eines bestehenden Windparks ohne eine Schädigung des Transformators erhöht werden. Insbesondere kann hierdurch ein "Chip-Tuning" bestehender Windkraftanlage(n) ermöglicht werden. Vorzugsweise kann der in den mindestens einen Transformator eingespeiste Strom abhängig von mindestens einer Transformatortemperatur und/oder der Windrichtung geregelt werden.

Beispielsweise kann eine Auswerteeinrichtung umfassend mindestens eine Vergleichseinrichtung vorgesehen sein. Die Vergleichseinrichtung kann zum Vergleichen des gemessenen Parameters mit mindestens einem vorgegebenen Grenzwert eingerichtet sein. Abhängig von dem Vergleichsergebnis kann dann der Strom geregelt, beispielsweise reduziert werden. Beispielsweise kann ein gemessener Parameter mit einem zulässigen Parameterbereich verglichen werden. Zumindest wenn der Parameterbereich außerhalb des vorgegebenen zulässigen Bereichs liegt, kann der in den Transformator eingespeiste Strom derart geregelt werden, bis der gemessene Parameter wieder im zulässigen Bereich liegt.

Vorzugsweise kann der mindestens eine gemessene Parameter die Temperatur des Transformators, wie die Wicklungstemperatur des Transformators und/oder die Kühlfluidtemperatur im Transformator, sein. Übersteigt die gemessene Temperatur eine vorgegebene maximal zulässige Temperatur (Grenzwert), kann vorzugsweise der eingespeiste Strom reduziert werden. Alternativ oder zusätzlich kann der mindestens eine gemessene Parameter ein meteorologischer Parameter umfassend die (lokale) Windgeschwindigkeit und/oder die (lokale) Windrichtung und/oder die (lokale) Luftfeuchtigkeit und die (lokale) Umgebungstemperatur und/oder die (lokale) Sonneneinstrahlung sein und beispielsweise von einer Auswerteeinrichtung ausgewertet werden. Auch in diesem Fall können Grenzwert(e) vorgegeben sein.

Wie oben bereits beschrieben wurde, kann eine Umspannstation zwei oder mehr Transformatoren aufweisen. Beispielsweise kann jeder Transformator mit einer entsprechenden Transformatorkühleinrichtung gekoppelt sein. Besonders bevorzugt kann eine Stromregelung implementiert sein, um abhängig von der jeweiligen augenblicklichen Temperatur der mindestens zwei Transformatoren eine Einspeisung des Stroms in den jeweiligen Transformator zu regeln. So kann gemäß einer Ausführungsform die Umspannstation mindestens einen weiteren Transformator umfassen. Die Messeinrichtung kann zum Messen von mindestens einem für die Temperatur des weiteren Transformators relevanten Parameter eingerichtet sein. Beispielsweise kann eine Messeinrichtung zwei oder mehr Messelemente, wie Temperaturmessgeräte, umfassen. Die Regelungseinrichtung kann zumindest zum Regeln des in den weiteren Transformator eingespeisten Stroms zumindest abhängig von den gemessenen Parametern der zumindest zwei Transformatoren eingerichtet sein. Beispielsweise kann eine Auswerteeinrichtung, die in der Regelungseinrichtung integriert sein kann, feststellen, dass bei mindestens einem ersten Transformator die zulässige Temperatur überschritten ist, während bei mindestens einem weiteren Transformator die Temperatur in einem zulässigen Bereich liegt. Daraufhin kann die Regelungseinrichtung den Stromfluss derart regeln (z.B. über Schalthandlungen im angeschlossenen Netz), dass der in den mindestens einen ersten Transformator eingespeiste Strom reduziert wird und der in den mindestens einen weiteren Transformator eingespeiste Strom (entsprechend) erhöht wird. Ändern sich die Temperaturverhältnisse erneut, kann erneut eine entsprechende Stromregelung erfolgen. Es versteht sich, dass eine Regelungseinrichtung zwei oder mehr geeignete Regler (z.B. I oder PI-Regler) aufweisen kann. Die Transformatoren können optimal (maximale Transformatorströme) betrieben und ausgelastet werden. Ferner kann eine gemeinsame Transformatordimensionierung von sämtlichen Transformatoren einer Umspannstation erfolgen.

Wie bereits beschrieben wurde, ist ein weiterer Aspekt der Erfindung ein Verfahren zum Regeln von mindestens einem Transformator von mindestens einer Umspannstation, umfassend:
- Messen von mindestens einen für die Temperatur des Transformators relevanten Parameters , wobei der gemessene Parameter ein meteorologischer Parameter ist, umfassend die Windgeschwindigkeit und/oder die Windrichtung, und
- Regeln des in den Transformator eingespeisten Stroms zumindest abhängig von dem gemessenen Parameter.

Die Umspannstation kann eine zuvor beschriebene Umspannstation sein. Beispielsweise kann die Temperatur des Transformators und/oder ein meteorologischer Parameter umfassend die Windgeschwindigkeit und/oder die Windrichtung und/oder die Luftfeuchtigkeit gemessen werden. Es versteht sich, dass die Umspannstation auch ohne eine Luftumlenkeinrichtung gebildet sein kann. Vorzugsweise kann das Verfahren ferner das Vergleichen des gemessenen Parameters mit mindestens einem vorgegebenen Grenzwert umfassen, wie zuvor bereits ausgeführt wurde.

Darüber hinaus ist ein noch weiterer Aspekt der Erfindung eine Vorrichtung für eine Umspannstation mit mindestens einem Transformator, insbesondere eine zuvor beschriebene Umspannstation. Die Vorrichtung umfasst mindestens eine Messeinrichtung eingerichtet zum Messen von mindestens einem für die Temperatur des Transformators relevanten Parameter, wobei der gemessene Parameter ein meteorologischer Parameter ist, umfassend die Windgeschwindigkeit und/oder die Windrichtung. Die Vorrichtung umfasst mindestens eine Vergleichseinrichtung eingerichtet zum Vergleichen des gemessenen Parameters mit mindestens einem vorgegebenen Grenzwert.

Die Vorrichtung umfasst mindestens eine Regelungseinrichtung zumindest eingerichtet zum Regeln des in den Transformator eingespeisten Stroms abhängig von dem Vergleichsergebnis.

Die Vorrichtung kann insbesondere entsprechend dem zuvor beschriebenen Verfahren und/oder den zuvor beschriebenen Einrichtungen betrieben werden.

Es gibt nun eine Vielzahl von Möglichkeiten, die erfindungsgemäße Umspannstation, die erfindungsgemäße Vorrichtung und das Verfahren auszugestalten und weiterzuentwickeln. Hierzu sei verwiesen auf die den unabhängigen Patentansprüchen nachgeordneten Patentansprüche.

In der Zeichnung zeigt:
- Fig. 1: eine schematische Seitenansicht eines ersten Ausführungsbeispiels einer Umspannstation gemäß der vorliegenden Anmeldung,
- Fig. 1a: eine schematische Perspektivansicht eines Ausführungsbeispiels einer Luftumlenkeinrichtung gemäß der vorliegenden Anmeldung,
- Fig. 2: eine schematische Draufsicht eines weiteren Ausführungsbeispiels einer Umspannstation gemäß der vorliegenden Anmeldung,

- Fig. 3: eine schematische Seitenansicht eines Ausführungsbeispiels einer Vorrichtung gemäß der vorliegenden Erfindung für eine Umspannstation,
- Fig. 4: eine schematische Seitenansicht eines weiteren Ausführungsbeispiels einer Umspannstation gemäß der vorliegenden Anmeldung, und
- Fig. 5: ein Diagramm eines Ausführungsbeispiels eines Verfahrens gemäß der vorliegenden Anmeldung.

In den Figuren werden für gleiche Elemente gleiche Bezugszeichen verwendet.

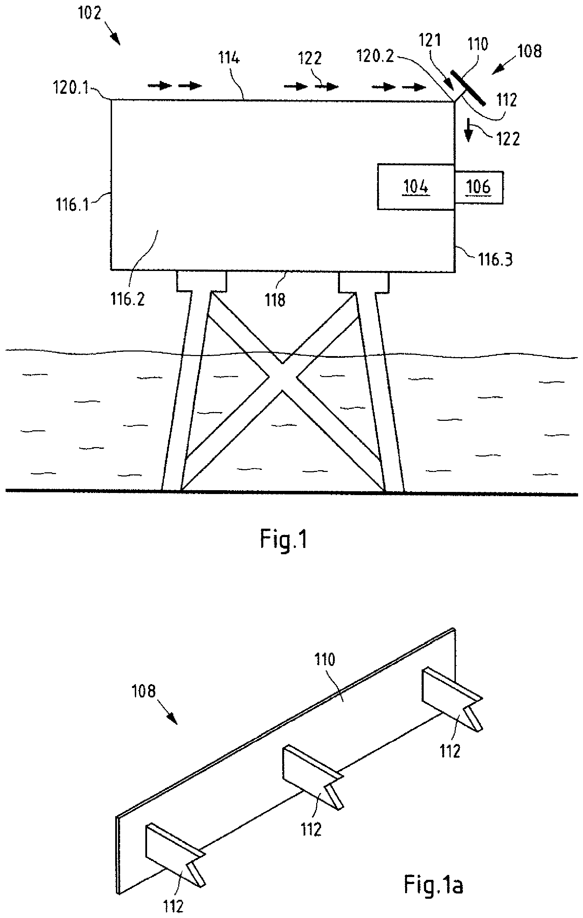

Figur 1 zeigt eine schematische Ansicht eines ersten Ausführungsbeispiels einer Umspannstation 102 gemäß der vorliegenden Anmeldung. Die Umspannstation ist vorliegend eine Offshore-Umspannstation 102 von einem (nicht gezeigten) Offshore-Windenergiesystem bzw. Offshore-Windenergiepark. Das Offshore-Windenergiesystem kann vorzugsweise über eine Vielzahl von Windkraftanlagen, die über Seekabel mit der Offshore-Umspannstation 102 bzw. Offshore-Substation 102 verbunden sind. Ein Seekabel ist insbesondere dazu eingerichtet, die von einer Windkraftanlage erzeugte elektrische Energie zur nächsten Windkraftanlage bzw. an die Offshore-Umspannstation 102 zu übertragen.

Insbesondere kann eine Mehrzahl von Windkraftanlagen in mehreren Strängen bzw. Strings in Reihe geschaltet sein. Beispielsweise können acht Stränge mit jeweils sechs Windkraftanlagen vorgesehen sein. Ein Ende eines Strangs kann elektrisch über ein Seekabel mit der Offshore-Umspannstation 102 verbunden sein. Ein anderes Ende kann über ein zusätzliches Seekabel mit einem weiteren Ende eines weiteren Strangs verbunden sein. Ferner kann vorgesehen, dass ein Strang optional mit mehreren anderen Strängen verbunden werden kann. Es versteht sich, dass gemäß anderen Varianten der Anmeldung die Windkraftanlagen auch in Ringstrukturen angeordnet sein können.

Zur Kommunikation zwischen den Windkraftanlagen und/oder mit der Offshore-Umspannstation 102 kann ein Kommunikationsnetz, welches drahtlos und/oder drahtgebunden konfiguriert sein kann, vorgesehen sein. Ferner können insbesondere zwei weitere Seekabel vorgesehen sein. Die weiteren Seekabel sind insbesondere eingerichtet, den von dem Offshore-Windenergiesystem erzeugten Strom von der Offshore-Umspannstation 102 an eine Kopfstation, wie eine HGÜ-Kopfstation, zu übertragen. Die HGÜ-Kopfstation kann auf dem Land oder der See angeordnet sein, um den erzeugten Strom bzw. die Leistung in ein öffentliches Stromnetz einzuspeisen. Die HGÜ-Kopfstation kann hierfür weitere Umspanneinrichtungen aufweisen. Insbesondere kann auch die HGÜ-Kopfstation entsprechend einer anmeldungsgemäßen Umspannstation gebildet sein.

Die Figur 1 zeigt insbesondere eine schematische Seitenansicht einer Offshore-Umspannstation 102. Die Offshore-Umspannstation 102 verfügt über ein Dach 114, einen Boden 118 und vorliegend über Seitenwände 116.1, 116.2 und 116.3. Insbesondere sind vier Seitenwände vorgesehen. Darüber hinaus umfasst die Offshore-Umspannstation 102 mindestens einen Transformator 104, der mit einer Transformatorkühleinrichtung 106 gekoppelt ist. Insbesondere kann ein Fluidkühlkreislauf vorgesehen sein, um die durch den hohen von dem Transformator zu verarbeitenden Strom erzeugte Wärme abzuführen. Wie zu erkennen ist, ist die Transformatorkühleinrichtung 106 an einer Seitenwand 116.3 befestigt.

Die Position der Transformatorkühleinrichtung 106 an einer Seitenwand 116.3 ist in der Regel zwingend. Insbesondere ist normalerweise auf dem Dach 118 kein Raum für eine derartige Einrichtung verfügbar (z.B. kann auf dem Dach ein Helikopterlandeplatz vorgesehen sein). Ein weiterer Punkt ist der gewünschte möglichst niedrige Schwerpunkt der Offshore-Umspannstation 102. Dies erlaubt aus praktischen Gründen keine Befestigung der Anordnung umfassend Transformator 104 und Transformatorkühleinrichtung 106 im Bereich des Dachs 118.

Darüber hinaus umfasst die Offshore-Umspannstation 102 mindestens eine Luftumlenkeinrichtung 108. Die Luftumlenkeinrichtung 108 umfasst mindestens ein flächiges Luftleitelement 110, vorliegend ein Luftleitblech 110, welches über mindestens ein Verbindungselement 112 mit der Offshore-Umspannstation 102 verbunden ist. Beispielsweise können die Enden eines Verbindungselements 108 mit dem Luftleitblech 110. bzw. der Offshore-Umspannstation 102 durch Verschraubung, Verschweißung oder dergleichen befestigt sein.

Wie aus Figur 1 zu erkennen ist, ist die Luftumlenkeinrichtung 108 an einer Dachkante 120.2, also im Bereich der Dachkante 102.2, angeordnet. Insbesondere ist die Luftumlenkeinrichtung 108 derart angeordnet, dass eine Luftbewegung 122 in Richtung der Transformatorkühleinrichtung 106 gelenkt wird. Dies bedeutet insbesondere, dass mittels der Luftumlenkeinrichtung 108 ein Luftkanal 121 zwischen Außenfläche der Offshore-Umspannstation 102 und Unterseite des mindestens einen Luftleitblechs 110 gebildet wird. Der Luftkanal 121 ist derart geformt, dass eine Luftbewegung 122 bzw. Windstrom 122 in Richtung der Transformatorkühleinrichtung 106 (um)gelenkt wird.

In dem vorliegenden Ausführungsbeispiel befindet sich die Transformatorkühleinrichtung 106 bei den vorliegenden Windbedingungen grundsätzlich im Windschatten. Um auch bei diesen Bedingungen eine Windkühlung zu erzielen, ist anmeldungsgemäß die Luftumlenkeinrichtung 108 angeordnet, welche eine Umlenkung des Winds 122 bzw. der Luftbewegung 122 in Richtung der Transformatorkühleinrichtung 106 bewirkt (siehe Pfeile). Dies ermöglicht zu jeder Zeit eine Windkühlung unabhängig von der Windrichtung.

In Figur 1a stellt eine schematische Perspektivansicht des in der Figur 1 angeordneten Ausführungsbeispiels einer Luftumlenkeinrichtung 108 dar. Bei der Luftumlenkeinrichtung 108 kann es sich um eine Stahlkonstruktion handeln. Andere Materialien sind denkbar.

Die vorliegende Luftumlenkeinrichtung 108 weist ein flächig gebildetes Luftleitblech 110 mit den Seitenlängen a und b (wobei a>b ist) auf. Die Dimensionen der Seitenlängen eines Luftleitblechs 108 hängen insbesondere von der Dimension der Transformatorkühleinrichtung 106 und/oder der Offshore-Umspannstation 102 ab. Ferner weist das Luftleitblech 110 vorliegend ein planes bzw. flaches Seitenprofil auf. Ferner verfügt die Luftumlenkeinrichtung 108 über eine Mehrzahl von Verbindungselementen 112. Das mindestens eine Verbindungselement 112 dient vorzugsweise gleichzeitig als Abstandshalter, um einen gewünschten Mindestabstand zwischen Außenfläche der Offshore-Umspannstation 102 und der Unterseite des mindestens einen Luftleitblechs 110 zu erzielen, so dass insbesondere ein Luftkanal 121 mit vorgegebenen Dimensionen und/oder Form gebildet werden kann. Es versteht sich, dass - wie auch nachfolgende Ausführungsbeispiele zeigen werden - eine Luftumlenkeinrichtung 108 andere Formen und/oder Dimensionen aufweisen kann.

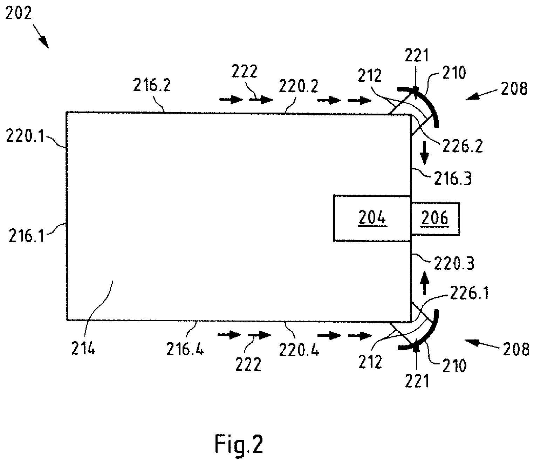

Die Figur 2 zeigt eine schematische Draufsicht eines weiteren Ausführungsbeispiels einer Offshore-Umspannstation 202 gemäß der vorliegenden Anwendung. Wie zu erkennen ist, weist die dargestellte Offshore-Umspannstation 102 einen rechteckförmigen Querschnitt auf mit vier Seitenwänden 216.1 bis 216.4. Hieraus resultieren vier Dachkanten 220.1 bis 220.4 (und vier Seitenkanten).

Die Offshore-Umspannstation 202 umfasst vorliegend zwei Luftumlenkeinrichtungen 208. Eine erste Luftumlenkeinrichtung 208 ist im Bereich einer ersten Seitenkante 226.1 und eine weitere Luftumlenkeinrichtung 208 ist im Bereich einer weiteren Seitenkante 226.1 angeordnet. Eine Luftumlenkeinrichtung 208 ist ähnlich der in Figur 1a gezeigten Luftumlenkeinrichtung 108 gebildet. Im Unterschied zu dieser weist die Luftumlenkeinrichtung 208 ein gebogenes Seitenprofil auf. Zudem sind anders gebildete Verbindungselemente 212 vorgesehen.

Jede Luftumlenkeinrichtung 208 ist derart an einer Seitenkante angeordnet, dass eine Luftbewegung 222 in Richtung der mindestens einen Transformatorkühleinrichtung 206 gelenkt werden kann. Wie zu erkennen ist, wird insbesondere ein Luftkanal 221 gebildet. Der Luftkanal 221 ist derart eingerichtet, dass eine Luftbewegung aus mindestens einer ersten Richtung in Richtung der Transformatorkühleinrichtung 206 gelenkt wird. Die Kühlleistung der Transformatorkühleinrichtung 206 kann signifikant erhöht werden.

Es versteht sich, dass bei anderen Varianten der Anmeldung eine weitere Luftumlenkeinrichtung an einer Dachkante angeordnet sein kann.

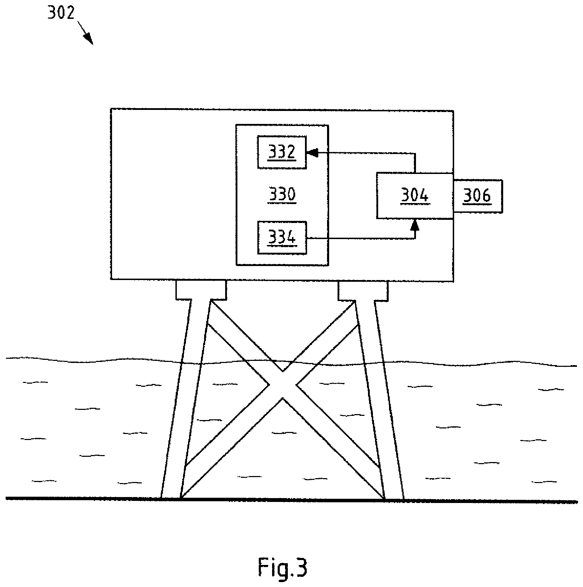

Die Figur 3 zeigt eine schematische Ansicht eines Ausführungsbeispiels einer Vorrichtung 330 gemäß der vorliegenden Erfindung für eine Umspannstation 302, insbesondere eine Offshore-Umspannstation 302. Die Offshore-Umspannstation 302 umfasst mindestens einen Transformator 304, der in zuvor beschriebener Weise mit einer Transformatorkühleinrichtung 306 gekoppelt ist.

Die Vorrichtung 330 ist insbesondere durch Hardware- und/oder Softwaremodule gebildet. Die dargestellte Vorrichtung 330 weist eine Messeinrichtung 332 zum Messen von mindestens einem für die Temperatur des Transformators 304 relevanten Parameter und eine Regelungsvorrichtung 334 zum Regeln des in den Transformator 304 eingespeisten Stroms zumindest abhängig von dem gemessenen Parameter auf. Die Messeinrichtung 332 ist vorliegend eingerichtet, vorzugsweise kontinuierlich und insbesondere in Echtzeit die Temperatur des Transformators 304 zu erfassen. Insbesondere kann die Fluidtemperatur des Kühlfluids (z.B. Öl) in dem Transformator 304 an einer oder mehreren Position(en) erfasst werden.

Die Regelungseinrichtung 334 ist eingerichtet, den in den Transformator 304 eingespeisten Strom (der durch eine oder mehrere Windkraftanlage(n) erzeugt wurde) abhängig von der gemessenen Temperatur zu regeln. Beispielsweise kann die Regelungseinrichtung 334 eine Auswerteeinrichtung zum Auswerten der gemessenen Transformatortemperatur umfassen. Es kann ein Grenzwert in Form einer maximal zulässigen Transformatortemperatur T_{zul} vorgegeben sein. Erreicht die gemessene Temperatur Tmess den Grenzwert T_{zul} (Tmess größer oder gleich T_{zul}), kann der eingespeiste Strom durch die Regelungseinrichtung 334 reduziert werden. Wenn die gemessene Temperatur wieder unterhalb der maximal zulässigen Transformatortemperatur liegt, kann der eingespeiste durch die Regelungseinrichtung 334 entsprechend erhöht werden.

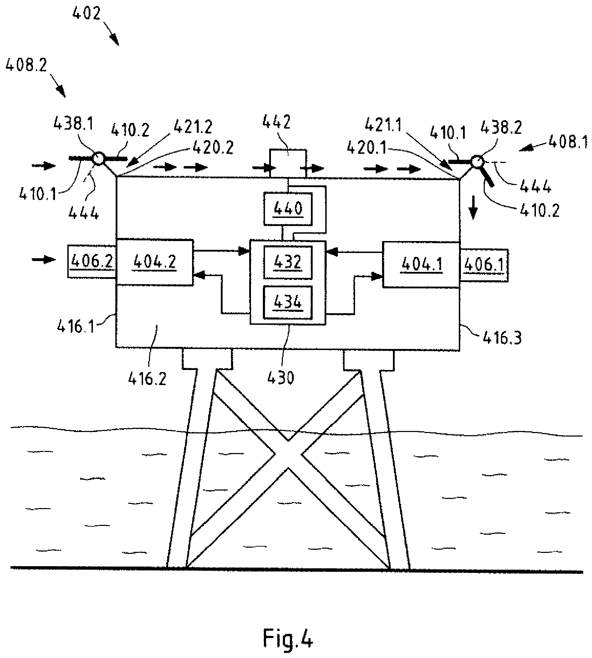

Figur 4 zeigt eine schematische Seitenansicht eines weiteren (besonders bevorzugten) Ausführungsbeispiels einer Umspannstation 402 der vorliegenden Anmeldung. In der vorliegenden Umspannstation 402 ist insbesondere eine Vorrichtung 430 umfassend eine Stromregelungseinrichtung 434 mit mindestens einer Luftumlenkeinrichtung 408.1, 408.2 kombiniert. Darüber hinaus umfasst die vorliegende Offshore-Umspannstation 402 mindestens zwei Transformatoren 404.1, 404.2, wobei jeder Transformator 404.1, 404.2 mit einer entsprechenden Transformatorkühleinrichtung 406.1, 406.2 in oben beschriebener Weise gekoppelt ist.

Die Vorrichtung 430 umfasst eine Messeinrichtung 432 und eine Regelungseinrichtung 434. Zudem ist die Vorrichtung 430 mit einer vorliegend auf dem Dach der Offshore-Umspannstation 402 angeordneten meteorologischen Messeinrichtung 442 gekoppelt. Diese Messeinrichtung 442 ist insbesondere eingerichtet kontinuierlich und vorzugsweise in Echtzeit die an der Offshore-Umspannstation 402 vorliegenden Wetterbedingung(en) zu messen. Beispielsweise kann die Messeinrichtung zumindest einen der folgenden Parameter messen: Windgeschwindigkeit, Windrichtung, Luftfeuchtigkeit, Umgebungstemperatur und Sonneneinstrahlung. Zumindest einer dieser Parameter kann der Regelungseinrichtung 434 zur Verfügung gestellt werden.

Die zur Verfügung gestellten Parameter können von der Regelungseinrichtung 434 ausgewertet werden. Abhängig von der Auswertung kann dann die Stromregelung der zumindest zwei Transformatoren 404.1, 404.2 erfolgen. Wenn beispielsweise eine Transformatortemperatur den zulässigen Grenzwert überschreitet, kann der in diesen Transformator 404.1 eingespeiste Strom reduziert und der in den weiteren Transformator 404.2 eingespeiste Strom erhöht werden (z.B. sofern ein Mindesttemperaturabstand zur max. zulässigen Temperatur vorliegt). Alternativ oder zusätzlich kann der mindestens eine meteorologische Parameter berücksichtigt werden. Wenn dieser Parameter beispielsweise indiziert, dass die augenblickliche (und vorhergesagte) Kühlleistung hoch ist (sein wird), dann kann der Strom entsprechend geregelt werden. Ist hingegen von einer geringeren augenblicklichen (und vorhergesagten) Kühlleistung auszugehen, kann der in diesem Transformator eingespeiste Strom (vorsorglich) reduziert werden. Die Betriebssicherheit kann erhöht und gleichzeitig die Leistungsfähigkeit der Transformatoren verbessert werden.

Darüber hinaus umfasst die vorliegende Umspannstation 402 mindestens zwei Luftumlenkeinrichtungen 408.1, 408.2. Eine dargestellte Luftumlenkeinrichtung 408.1, 408.2 ist insbesondere eine dynamisch veränderbare Luftumlenkeinrichtung 408.1, 408.2. Eine dynamisch veränderbare Luftumlenkeinrichtung 408.1, 408.2 gemäß der vorliegenden Anmeldung zeichnet sich dadurch aus, dass der gebildete Luftkanal 421.1, 421.2, insbesondere seine Form, geändert werden kann.

Vorliegend umfasst eine Luftumlenkeinrichtung 408.1, 408.2 zumindest zwei Luftleitbleche 410.1, 410.2, welche durch einen Aktuator 438.1, 438.2 miteinander gekoppelt sind. Der Aktuator 438.1, 438.2 kann zudem mit einem Verbindungselement verbunden sein. Ein Aktuator 438.1, 438.2 ist insbesondere eingerichtet, ein Luftleitblech 410.1, 410.2 zwischen einer ersten Position und einer weiteren Position (durch gestrichelte Linien 444 angedeutet) zu verfahren bzw. zu bewegen. Es versteht sich, dass der Aktuator 438.1, 438.2 ein Luftleitblech in eine Zwischenposition zwischen der ersten Position und der weiteren (End-) Position verfahren kann.

Wie zu erkennen ist, kann durch das Verfahren des mindestens einen Luftleitblechs 410.1, 410.2 die Form des Luftkanals und damit die Lenkung einer Luftbewegung 422 geändert werden. Vorliegend ist beispielhaft der Fall zeichnerisch dargestellt, dass die Windrichtung in der Zeichenebene von links nach rechts verläuft. Hierdurch wird die Transformatorkühleinrichtung 406.2 direkt von der Luftbewegung 422 gekühlt, während die weitere Transformatorkühleinrichtung 406.1 im Windschatten liegt. Durch die Einstellung der beiden Luftkanäle 421.1, 421.2 kann die Luftbewegung 422 bzw. der Luftstrom 422 in Richtung der weiteren Transformatorkühleinrichtung 406.1 abgelenkt werden.

Um abhängig von gegenwärtigen und lokalen Wetterverhältnissen die Aktuatoren derart zu steuern, dass eine möglichst optimale Kühlung der zumindest zwei an den Seitenwänden 416.1, 416.3 angeordneten Transformatorkühleinrichtungen 406.1, 406.2 erreicht wird, ist vorliegend eine Steuereinrichtung 440 vorgesehen. Beispielsweise kann die weitere Messeinrichtung 442 der Steuereinrichtung mindestens einen der vorgenannten Parameter zur Verfügung stellen. Darüber hinaus kann vorgesehen sein, dass von einer weiteren Datenquelle (z.B. Wetterdatenanbieter) weitere meteorologische Wetterdaten (z.B. Vorhersagen) bereitgestellt werden können. Abhängig von dem mindestens einen Parameter (z.B. augenblickliche Windrichtung) kann die Steuereinrichtung 440 mindestens einen Aktuator 438.1, 438.2 ansteuern, um ein Verfahren bzw. Bewegen von mindestens einem Luftleitblech 410.1, 410.2 zu bewirken. Beispielsweise kann eine drahtlose Kommunikationsverbindung zwischen den Aktuatoren 438.1, 438.2 und der Steuereinrichtung 440 vorgesehen sein.

Bei einer vorteilhaften Ausführungsform kann zusätzlich oder alternativ vorgesehen sein, dass die Messeinrichtung 432 der Steuereinrichtung 440 die gemessene(n) Transformatortemperatur(en) zur Verfügung stellt. In diesem Fall kann die Steuereinrichtung 440 zumindest auch eingerichtet sein, den mindestens einen Aktuator 438.1, 438.2 zumindest abhängig von der/n Transformatortemperatur(en) anzusteuern, um zum Beispiel eine Änderung einer Form eines Luftkanals 421.1, 421.2 zu bewirken. Beispielsweise können abhängig von den augenblicklichen Transformatortemperaturen die Aktuatoren 438.1, 438.2 derart angesteuert werden, dass ein Transformator 404.1, 404.2, dessen Temperatur zumindest im Bereich der maximal zulässigen Temperatur ist, eine besseren Luftkühlung erfährt, als ein weiterer Transformator 404.1, 404.2.

Es versteht sich, dass eine Transformatorkühleinrichtung und ein Transformator eine funktionale Einheit bilden können.

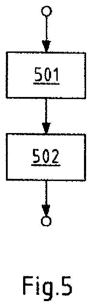

Schließlich zeigt die Figur 5 ein Diagramm eines Ausführungsbeispiels eines Verfahrens gemäß der vorliegenden Anmeldung. Das Verfahren kann insbesondere zum Betreiben von einer zuvor beschriebenen Vorrichtung 330, 430 eingesetzt werden.

In einem ersten Schritt 501 kann, wie oben bereits beschrieben wurde, mindestens ein für die Temperatur des Transformators relevanter Parameter gemessen werden. Im nächsten Schritt 502 kann abhängig von dem gemessenen Parameter der in den Transformator eingespeiste Strom geregelt werden. Es versteht sich, dass die Schritte 501 und 502 zumindest teilweise parallel durchgeführt werden können.

## Patentansprüche

1. Offshore-Umspannstation (102, 202, 302, 402), umfassend:
- mindestens einen Transformator (104, 204, 304, 404.1, 404.2),
- mindestens eine an mindestens einer Seitenwand (116.3, 216.3, 416.3) der Umspannstation (102, 202, 302, 402) oder einem Dach (114, 214) der Umspannstation (102, 202, 302, 402) angeordnete Transformatorkühleinrichtung (106, 206, 306, 406.1, 406.2) eingerichtet zum Kühlen des mindestens einen Transformators (104, 204, 304, 404.1, 404.2),
**dadurch gekennzeichnet, dass** die Umspannstation (102, 202, 302, 402) ferner umfasst:
- mindestens eine an mindestens einer Dachkante (120.1, 120.2, 220.1-220.4), bei der eine vertikale Wand auf eine horizontale Wand trifft, der Umspannstation (102, 202, 302, 402) angeordnete Luftumlenkeinrichtung (108, 208, 408.1, 408.2) und/oder mindestens eine an mindestens einer Seitenkante (226.1, 226.2), bei der eine erste vertikale Wand auf eine weitere vertikale Wand trifft, der Umspannstation (102, 202, 302, 402) angeordnete Luftumlenkeinrichtung (108, 208, 408.1, 408.2),
- wobei die Luftumlenkeinrichtung (108, 208, 408.1, 408.2) derart angeordnet ist, dass eine Luftbewegung in Richtung der Transformatorkühleinrichtung (106, 206, 306, 406.1, 406.2) lenkbar ist.

2. Umspannstation (102, 202, 302, 402) nach Anspruch 1, **dadurch gekennzeichnet, dass**
- die Luftumlenkeinrichtung (108, 208, 408.1, 408.2) mindestens ein flächiges Luftleitelement (110, 210, 410.1, 410.2) umfasst,
- wobei das Luftleitelement (110, 210, 410.1, 410.2) insbesondere ein planes Seitenprofil oder ein gebogenes Seitenprofil umfasst.

3. Umspannstation (102, 202, 302, 402) nach Anspruch 2, **dadurch gekennzeichnet, dass** mindestens ein Verbindungselement vorgesehen ist, um die Luftumlenkeinrichtung im Bereich einer Dachkante oder einer Seitenkante zu befestigen, wobei das mindestens eine Verbindungselement derart gebildet ist, dass ein Mindestabstand von mindestens 0,1 m, bevorzugt zwischen 1 m und 10 m, zwischen der Luftumlenkeinrichtung und der entsprechenden Kante vorliegt.

4. Umspannstation (102, 202, 302, 402) nach Anspruch 2 oder 3, **dadurch gekennzeichnet, dass**
- die Luftumlenkeinrichtung (108, 208, 408.1, 408.2) mindestens einen in Wirkverbindung mit dem Luftleitelement (110, 210, 410.1, 410.2) stehenden Aktuator (438.1, 438.2) umfasst,
- wobei der Aktuator (438.1, 438.2) zum Verfahren des Luftleitelements (110, 210, 410.1, 410.2) zwischen mindestens einer ersten Position und einer weiteren Position eingerichtet ist.

5. Umspannstation (102, 202, 302, 402) nach Anspruch 4, **dadurch gekennzeichnet, dass**
- die Umspannstation (102, 202, 302, 402) mindestens eine Steuereinrichtung (440) eingerichtet zum Steuern des Aktuators (438.1, 438.2) umfasst,
- wobei die Steuereinrichtung (440) zum Steuern des Aktuators (438.1, 438.2) abhängig von mindestens einem bereitgestellten meteorologischen Parameter eingerichtet ist.

6. Umspannstation (102, 202, 302, 402) nach Anspruch 5, **dadurch gekennzeichnet, dass** der mindestens eine meteorologische Parameter die Windgeschwindigkeit und/oder die Windrichtung und/oder die Luftfeuchtigkeit und/oder die Umgebungstemperatur und/oder die Sonneneinstrahlung ist.

7. Umspannstation (102, 202, 302, 402) nach einem der vorherigen Ansprüche, **dadurch gekennzeichnet, dass** die Umspannstation (102, 202, 302, 402) ferner umfasst:
- mindestens eine Messeinrichtung (332, 432) eingerichtet zum Messen von mindestens einem für die Temperatur des Transformators (104, 204, 304, 404.1, 404.2) relevanten Parameter, und
- mindestens eine Regelungseinrichtung (334, 434) zumindest eingerichtet zum Regeln des in den Transformator (104, 204, 304, 404.1, 404.2) eingespeisten Stroms zumindest abhängig von dem gemessenen Parameter.

8. Umspannstation (102, 202, 302, 402) nach Anspruch 7, **dadurch gekennzeichnet, dass** der mindestens eine gemessene Parameter die Temperatur des Transformators (104, 204, 304, 404.1, 404.2) und/oder ein meteorologischer Parameter umfassend die Windgeschwindigkeit und/oder die Windrichtung und/oder die Luftfeuchtigkeit und/oder die Umgebungstemperatur und/oder die Sonneneinstrahlung ist.

9. Umspannstation (102, 202, 302, 402) nach Anspruch 7 oder 8, **dadurch gekennzeichnet, dass**
- die Umspannstation (102, 202, 302, 402) mindestens einen weiteren Transformator (104, 204, 304, 404.1, 404.2) umfasst,
- wobei die Messeinrichtung (104, 204, 304, 404.1, 404.2) zum Messen von mindestens einem für die Temperatur des weiteren Transformators (104, 204, 304, 404.1, 404.2) relevanten Parameter eingerichtet ist, und
- wobei die Regelungseinrichtung (334, 434) zumindest zum Regeln des in den weiteren Transformator (104, 204, 304, 404.1, 404.2) eingespeisten Stroms zumindest abhängig von den gemessenen Parametern der zumindest zwei Transformatoren (104, 204, 304, 404.1, 404.2) eingerichtet ist.

10. Verfahren zum Regeln von mindestens einem Transformator (104, 204, 304, 404.1, 404.2) von mindestens einer Umspannstation (102, 202, 302, 402) nach einem der Ansprüche 1 bis 9, das Verfahren umfassend:
- Messen von mindestens einem für die Temperatur des Transformators (104, 204, 304, 404.1, 404.2) relevanten Parameters, wobei der gemessene Parameter ein meteorologischer Parameter ist, umfassend die Windgeschwindigkeit und/oder die Windrichtung, und
- Regeln des in den Transformator (104, 204, 304, 404.1, 404.2) eingespeisten Stroms zumindest abhängig von dem gemessenen Parameter.

11. Vorrichtung (330, 430) für eine Umspannstation (102, 202, 302, 402) nach einem der Ansprüche 1 bis 9 mit mindestens einem Transformator (104, 204, 304, 404.1, 404.2), die Vorrichtung (330, 430) umfassend:
- mindestens eine Messeinrichtung (332, 432) eingerichtet zum Messen von mindestens einem für die Temperatur des Transformators (104, 204, 304, 404.1, 404.2) relevanten Parameter, wobei der gemessene Parameter ein meteorologischer Parameter ist, umfassend die Windgeschwindigkeit und/oder die Windrichtung,
- mindestens eine Vergleichseinrichtung zum Vergleichen des gemessenen Parameters mit mindestens einem vorgegebenen Grenzwert, und
- mindestens eine Regelungseinrichtung (334, 434) zumindest eingerichtet zum Regeln des in den Transformator (104, 204, 304, 404.1, 404.2) eingespeisten Stroms abhängig von dem Vergleichsergebnis.

## Claims

1. An offshore transformer station (102, 202, 302, 402):
- at least one transformer (104, 204, 304, 404.1, 404.2),
- at least one transformer cooling unit (106, 206, 306, 406.1, 406.2) arranged on at least one side wall (116.3, 216.3, 416.3) of the transformer station (102, 202, 302, 402) or a roof (114, 214) of the transformer station (102, 202, 302, 402) and configured to cool the at least one transformer (104, 204, 304, 404.1, 404.2), **characterized in that** the transformer station (102, 202, 302, 402) further comprises:
- at least one air deflecting unit (108, 208, 408.1, 408.2) arranged on at least one roof edge (120.1, 120.2, 220.1-220.4), at which a vertical wall meets a horizontal wall, of the transformer station (102, 202, 302, 402) and/or at least one air deflecting unit (108, 208, 408.1, 408.2) arranged on at least one side edge (226.1, 226.2), at which a first vertical wall meets a further vertical wall, of the transformer station (102, 202, 302, 402),
- wherein the air deflecting unit (108, 208, 408.1, 408.2) is arranged such that an air movement is steerable in the direction of the transformer cooling unit (106, 206, 306, 406.1, 406.2).

2. Transformer station (102, 202, 302, 402) according to claim 1, **characterized in that**
- the air deflecting unit (108, 208, 408.1, 408.2) comprises at least one flat air deflecting element (110, 210, 410.1, 410.2),
- wherein the air deflecting element (110, 210, 410.1, 410.2) comprises, in particular, a planar side profile or a curved side profile.

3. Transformer station (102, 202, 302, 402) according to claim 2, **characterized in that** at least one connecting element is provided in order to fix the air deflection unit in the area of a roof edge or a side edge, the at least one connecting element being formed in such a way that there is a minimum distance of at least 0.1 m, preferably between 1 m and 10 m, between the air deflection unit and the corresponding edge.

4. Transformer station (102, 202, 302, 402) according to claim 2 or 3, **characterized in that**
- the air deflecting unit (108, 208, 408.1, 408.2) comprises at least one actuator (438.1, 438.2) operatively connected to the air deflecting element (110, 210, 410.1, 410.2),
- wherein the actuator (438.1, 438.2) is configured to move the air deflecting element (110, 210, 410.1, 410.2) between at least a first position and a further position.

5. Transformer station (102, 202, 302, 402) according to claim 4, **characterized in that**
- the transformer station (102, 202, 302, 402) comprises at least one control unit (440) configured to control the actuator (438.1, 438.2),
- wherein the control means (440) is configured to control the actuator (438.1, 438.2) depending on at least one provided meteorological parameter.

6. Transformer station (102, 202, 302, 402) according to claim 5, **characterized in that** the at least one meteorological parameter is the wind speed and/or the wind direction and/or the air humidity and/or the ambient temperature and/or the solar radiation.

7. Transformer station (102, 202, 302, 402) according to one of the previous claims, **characterized in that** the transformer station (102, 202, 302, 402) further comprises:
- at least one measuring unit (332, 432) configured to measure at least one parameter relevant to the temperature of the transformer (104, 204, 304, 404.1, 404.2), and
- at least one control device (334, 434) at least configured to control the current fed into the transformer (104, 204, 304, 404.1, 404.2) at least depending on the measured parameter.

8. Transformer station (102, 202, 302, 402) according to claim 7, **characterized in that** the at least one measured parameter is the temperature of the transformer (104, 204, 304, 404.1, 404.2) and/or a meteorological parameter comprising the wind speed and/or the wind direction and/or the air humidity and/or the ambient temperature and/or the solar radiation.

9. Transformer station (102, 202, 302, 402) according to claim 7 or 8, **characterized in that**
- the transformer station (102, 202, 302, 402) comprises at least one further transformer (104, 204, 304, 404.1, 404.2),
- wherein the measuring unit (104, 204, 304, 404.1, 404.2) is configured to measure at least one parameter relevant to the temperature of the further transformer (104, 204, 304, 404.1, 404.2), and
- wherein the control device (334, 434) is configured at least to control the current fed into the further transformer (104, 204, 304, 404.1, 404.2) at least depending on the measured parameters of the at least two transformers (104, 204, 304, 404.1, 404.2).

10. A method for controlling at least one transformer (104, 204, 304, 404.1, 404.2) of at least one transformer station (102, 202, 302, 402) according to one of the previous claims 1 to 9, the method comprising:
- measuring at least one parameter relevant to the temperature of the transformer (104, 204, 304, 404.1, 404.2), wherein the measured parameter is a meteorological parameter comprising the wind speed and/or wind direction, and
- controlling the current fed into the transformer (104, 204, 304, 404.1, 404.2) at least depending on the measured parameter.

11. An apparatus (330, 430) for a transformer station (102, 202, 302, 402) with at least one transformer (104, 204, 304, 404.1, 404.2) according to one of claims 1 to 9, the apparatus (330, 430) comprising:
- at least one measuring unit (332, 432) configured to measure at least one parameter relevant to the temperature of the transformer (104, 204, 304, 404.1, 404.2), wherein the measured parameter is a meteorological parameter comprising the wind speed and/or wind direction, and
- at least one control device (334, 434) at least configured to control the current fed into the transformer (104, 204, 304, 404.1, 404.2) depending on the measured parameter.

## Revendications

1. Poste de transformation offshore (102, 202, 302, 402), comprenant :
- au moins un transformateur (104, 204, 304, 404.1, 404.2),
- au moins un dispositif de refroidissement de transformateur (106, 206, 306, 406.1, 406.2) disposé sur au moins une paroi latérale (116.3, 216.3, 416.3) du poste de transformation (102, 202, 302, 402) ou sur un toit (114, 214) du poste de transformation (102, 202, 302, 402), configuré pour refroidir le au moins un transformateur (104, 204, 304, 404.1, 404.2),
**caractérisé en ce que** le poste de transformation (102, 202, 302, 402) comprend en outre :
- au moins un dispositif de déviation d'air (108, 208, 408.1, 408.2) disposé sur au moins un bord de toit (120.1, 120.2, 220.1-220.4) de la station de transformation (102, 202, 302, 402). 2), où une paroi verticale rencontre une paroi horizontale, et/ou au moins un dispositif de déviation d'air (108, 208, 408.1, 408.2) disposé sur au moins un bord latéral (226.1, 226.2) du poste de transformation (102, 202, 302, 402), où une première paroi verticale rencontre une autre paroi verticale,
- où le dispositif de déviation d'air (108, 208, 408.1, 408.2) est disposé de telle sorte qu'un mouvement d'air est dirigeable en direction du dispositif de refroidissement du transformateur (106, 206, 306, 406.1, 406.2).

2. Poste de transformation (102, 202, 302, 402) selon la revendication 1, **caractérisé en ce que**
- le dispositif de déviation d'air (108, 208, 408.1, 408.2) comprend au moins un élément de guidage d'air plat (110, 210, 410.1, 410.2),
- où l'élément de guidage d'air (110, 210, 410.1, 410.2) comprenant en particulier un profil latéral plan ou un profil latéral courbé.

3. Poste de transformation (102, 202, 302, 402) selon la revendication 2, **caractérisé en ce qu'**au moins un élément de liaison est fourni pour fixer le dispositif de déviation d'air dans la zone d'un bord de toit ou d'un bord latéral, où le au moins un élément de liaison est formé de telle sorte qu'il existe une distance minimale d'au moins 0,1 m, de préférence comprise entre 1 m et 10 m, entre le dispositif de déviation d'air et le bord correspondant.

4. Poste de transformation (102, 202, 302, 402) selon la revendication 2 ou 3, **caractérisé en ce que**
- le dispositif de déviation d'air (108, 208, 408.1, 408.2) comprend au moins un actionneur (438.1, 438.2) en liaison active avec l'élément de guidage d'air (110, 210, 410.1, 410.2),
- où l'actionneur (438.1, 438.2) est configuré pour déplacer l'élément de guidage d'air (110, 210, 410.1, 410.2) entre au moins une première position et une autre position.

5. Poste de transformation (102, 202, 302, 402) selon la revendication 4, **caractérisé en ce que**
- le poste de transformation (102, 202, 302, 402) comprend au moins un dispositif de commande (440) configuré pour commander l'actionneur (438.1, 438.2),
- où le dispositif de commande (440) est configuré pour commander l'actionneur (438.1, 438.2) en fonction d'au moins un paramètre météorologique mis à disposition.

6. Poste de transformation (102, 202, 302, 402) selon la revendication 5, **caractérisée en ce que** le au moins un paramètre météorologique est la vitesse de vent et/ou la direction de vent et/ou l'humidité d'air et/ou la température ambiante et/ou le rayonnement solaire.

7. Poste de transformation (102, 202, 302, 402) selon l'une des revendications précédentes, **caractérisée en ce que** la Poste de transformation (102, 202, 302, 402) comprend en outre :
- au moins un dispositif de mesure (332, 432) configuré pour mesurer au moins un paramètre pertinent pour la température du transformateur (104, 204, 304, 404.1, 404.2), et
- au moins un dispositif de réglage (334, 434) au moins configuré pour régler le courant injecté dans le transformateur (104, 204, 304, 404.1, 404.2) au moins en fonction du paramètre mesuré.

8. Poste de transformation (102, 202, 302, 402) selon la revendication 7, **caractérisé en ce que** le au moins un paramètre mesuré est la température du transformateur (104, 204, 304, 404.1, 404.2) et/ou un paramètre météorologique comprenant la vitesse de vent et/ou la direction de vent et/ou l'humidité d'air et/ou la température ambiante et/ou le rayonnement solaire.

9. Poste de transformation (102, 202, 302, 402) selon la revendication 7 ou 8, **caractérisée en ce que**
- le poste de transformation (102, 202, 302, 402) comprend au moins un autre transformateur (104, 204, 304, 404.1, 404.2),
- où le dispositif de mesure (104, 204, 304, 404.1, 404.2) est configuré pour mesurer au moins un paramètre pertinent pour la température de l'autre transformateur (104, 204, 304, 404.1, 404.2), et
- où le dispositif de réglage (334, 434) est configuré au moins pour régler le courant injecté dans l'autre transformateur (104, 204, 304, 404.1, 404.2) au moins en fonction des paramètres mesurés des au moins deux transformateurs (104, 204, 304, 404.1, 404.2).

10. Procédé de réglage d'au moins un transformateur (104, 204, 304, 404.1, 404.2) d'au moins un poste de transformation (102, 202, 302, 402) selon l'une des revendications 1 à 9, le procédé comprenant :
- mesurer au moins un paramètre pertinent pour la température du transformateur (104, 204, 304, 404.1, 404.2), où le paramètre mesuré est un paramètre météorologique comprenant la vitesse et/ou la direction de vent, et
- régler le courant injecté dans le transformateur (104, 204, 304, 404.1, 404.2) au moins en fonction du paramètre mesuré.

11. Dispositif (330, 430) pour un poste de transformation (102, 202, 302, 402) selon l'une des revendications 1 à 9 avec au moins un transformateur (104, 204, 304, 404.1, 404.2), le dispositif (330, 430) comprenant :
- au moins un dispositif de mesure (332, 432) configuré pour mesurer au moins un paramètre pertinent pour la température du transformateur (104, 204, 304, 404.1, 404.2), où le paramètre mesuré est un paramètre météorologique comprenant la vitesse et/ou la direction de vent,
- au moins un dispositif de comparaison pour comparer le paramètre mesuré à au moins une valeur limite prédéterminée, et
- au moins un dispositif de réglage (334, 434) au moins configuré pour régler le courant injecté dans le transformateur (104, 204, 304, 404.1, 404.2) en fonction du résultat de la comparaison.
